# EUROPÄISCHE PATENTSCHRIFT

(11) **EP 3 253 981 B1**
(45) Veröffentlichungstag und Bekanntmachung des Hinweises auf die Patenterteilung: **17.06.2020**
(21) Anmeldenummer: 16711123.6
(22) Anmeldetag: 28.01.2016
(51) Int. Cl.: F16D 13/75, F16D 13/70

(54) **REIBKUPPLUNGSVORRICHTUNG MIT VERSCHLEISSNACHSTELLUNG**
FRICTION CLUTCH WITH WEAR COMPENSATION
EMBRAYAGE À FRICTION AVEC DISPOSITIF DE RATTRAPAGE D'USURE

(30) Priorität: 04.02.2015 DE 102015201885
(43) Veröffentlichungstag der Anmeldung: 13.12.2017
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2016/200053
(87) Internationale Veröffentlichungsnummer: WO 2016/124187

(56) Entgegenhaltungen:
- DE-A1-102011 104 369
- GB-A- 2 087 001

## Beschreibung

Die Erfindung betrifft eine normal-eingerückte Reibkupplungsvorrichtung, insbesondere eine normal-eingerückte Einzelkupplung, für einen Antriebsstrang eines Kraftfahrzeuges aufweisend eine Antriebseinheit und ein Getriebe, die über die Reibkupplungsvorrichtung zur Übertragung von Drehmomenten verbindbar sind.

Aus DE 44 20 251 A1 ist eine normal-eingerückte Kupplungsvorrichtung für einen Antriebsstrang eines Kraftfahrzeuges mit einer Gegendruckplatte und einer durch eine Tellerfeder in axialer Richtung der Kupplungsvorrichtung begrenzt verlagerbarer Anpressplatte zur reibschlüssigen Klemmung einer Kupplungsscheibe zwischen der Gegendruckplatte und der Anpressplatte bekannt. Ein Deckelbauteil weist mehrere Laschenabschnitte auf, durch die die Tellerfeder unter Zwischenlage zweier Drahtringe am Deckelbauteil verkippbar befestigt.

Aus der noch unveröffentlichten DE 10 2014 202 438 der Anmelderin ist eine Einzelkupplung bekannt, bei der die Reibfläche der axialfesten Gegendruckplatte mit getriebeseitigen Reibbelägen der Kupplungsscheibe in Anlage bringbar ist, während die Reibfläche der axial beweglichen Anpressplatte mit motorseitigen Reibbelägen der Kupplungsscheibe in Anlage bringbar ist.

Aus der DE 10 2009 035 225 A1 ist eine Reibungskupplung mit einer weggesteuerten Nachstelleinrichtung (TAC - travel adjusted clutch) bekannt, bei der ein Verschleiß der Reibbeläge kompensiert wird, indem ein entstehender Abstand zwischen Anpressplatte und Hebelsystem mittels einer Verdrehung eines zwischen Anpressplatte und Hebelsystem angeordneten Rampensystems mittels einer Spindel mit einem Ritzel ausgeglichen wird.

Andere Reibungskupplungen mit Verschleißnachstellvorrichtungen sind aus GB 2087001 oder aus DE 10 2011 104 369 bekannt.

Hiervon ausgehend liegt der vorliegenden Erfindung die Aufgabe zugrunde, die aus dem Stand der Technik bekannte weggesteuerte Nachstelleinrichtung in den neuen Typ einer Reibkupplungsvorrichtung gemäß DE 10 2104 202 438 zu integrieren.

Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft eine normal-eingerückte Reibkupplungsvorrichtung, insbesondere eine normal-eingerückte Einzelkupplung, für einen Antriebsstrang eines Kraftfahrzeuges aufweisend eine Antriebseinheit und ein Getriebe, die über die Reibkupplungsvorrichtung zur Übertragung von Drehmomenten verbindbar sind, wobei die Reibkupplungsvorrichtung zumindest ein getriebeseitiges Deckelbauteil, zumindest eine mit einer Abtriebsseite der Antriebseinheit verbindbare Gegendruckplatte und zumindest eine bezüglich der Gegendruckplatte in axialer Richtung der Reibkupplungsvorrichtung begrenzt verlagerbare Anpressplatte aufweist zur reibschlüssigen Klemmung einer Kupplungsscheibe zwischen der Gegendruckplatte und der Anpressplatte, wobei zur reibschlüssigen Klemmung ein getriebeseitiger Reibbelag der Kupplungsscheibe mit einer ersten Reibfläche der Gegendruckplatte in Anlage bringbar ist, und ein motorseitiger Reibbelag der Kupplungsscheibe mit einer zweiten Reibfläche der Anpressplatte in Anlage bringbar ist, wobei die Abtriebsseite eine in der axialen Richtung nicht verlagerbare Schwungscheibe umfasst, wobei die Schwungscheibe und die Gegendruckplatte über eine Mehrzahl von Blattfedern drehfest miteinander verbunden sind, wobei die Gegendruckplatte über eine Verschleißnachstellvorrichtung in der axialen Richtung gegenüber der Schwungscheibe zum Ausgleichen eines Verschleißes der Reibbeläge bewegbar ist.

Insbesondere wird die Reibkupplungsvorrichtung in einem Antriebsstrang eines Kraftfahrzeuges eingebaut. Die Reibkupplungsvorrichtung wird dabei zwischen Antriebseinheit und Getriebe angeordnet. Die Reibkupplungsvorrichtung ist auf der einen Seite mit der Abtriebsseite der Antriebseinheit verbunden und überträgt, bei geschlossener Kupplung, Drehmomente auf eine Kupplungsscheibe, die mit einer Getriebeeingangswelle verbunden ist.

Die eingangs angeführte DE 10 2014 202 438 wird hinsichtlich der Anordnung von Deckelbauteil, Gegendruckplatte, Anpressplatte und Kupplungsscheibe vollumfänglich in Bezug genommen. Die dortigen Ausführungen gelten hier entsprechend.

Insbesondere ist der getriebeseitige Reibbelag der Kupplungsscheibe auf der dem Getriebe zugewandten Seite der Kupplungsscheibe angeordnet. Entsprechend ist der motorseitige Reibbelag auf der der Antriebseinheit (Motor) zugewandten Seite der Kupplungsscheibe angeordnet.

Bevorzugt ist die Reibfläche der Gegendruckplatte in der axialen Richtung zwischen der Reibfläche der Anpressplatte und dem Deckelbauteil angeordnet.

Insbesondere ist das Deckelbauteil mit der Anpressplatte fest verbunden und gemeinsam mit der Anpressplatte in axialer Richtung verlagerbar.

Bevorzugt ist eine Tellerfeder verkippbar an dem Deckelbauteil gelagert und stützt sich an der Schwungscheibe ab, so dass das Deckelbauteil und die Anpressplatte bei Betätigung der Reibkupplungsvorrichtung gegenüber der Schwungscheibe in der axialen Richtung verlagerbar sind zur reibschlüssigen Klemmung einer Kupplungsscheibe zwischen der Gegendruckplatte und der Anpressplatte.

Insbesondere ist die Schwungscheibe in der axialen Richtung zumindest teilweise zwischen der Gegendruckplatte und dem Deckelbauteil angeordnet.

Die eingangs angeführte DE 10 2009 035 225 A1 wird hinsichtlich der Ausführungen zur weggesteuerten Nachstelleinrichtung vollumfänglich in Bezug genommen. Insbesondere gelten die dortigen Ausführungen zur Nachstelleinrichtung mit Rampenring, Gegenrampen, Spindelhalter, Spindel, Spindelmutter, Spindelgewinde, Ritzel, Klinke hier gleichermaßen.

Insbesondere weist die Verschleißnachstellvorrichtung einen in einer Umfangsrichtung verdrehbaren Rampenring auf, der mit an der Gegendruckplatte angeordneten Gegenrampen zum Bewegen der Gegendruckplatte in der axialen Richtung zusammenwirkt.

Bevorzugt weist die Verschleißnachstellvorrichtung weiter eine Spindel und ein damit verbundenes Ritzel auf, wobei Rampenring, Gegenrampen, Spindel und Ritzel in der axialen Richtung zwischen Schwungscheibe und Gegendruckplatte angeordnet sind.

Insbesondere ist das Ritzel zusammen mit Spindel und Rampenring an der Schwungscheibe befestigt.

Insbesondere weist die Verschleißnachstellvorrichtung weiter eine Antriebsklinke (in DE 10 2009 035 225 A1: Klinke) zum Antrieb des Ritzels auf, wobei die Antriebsklinke mit dem Deckelelement oder der Anpressplatte fest verbunden ist und gemeinsam zumindest mit der Anpressplatte in axialer Richtung verlagerbar ist.

Fest verbunden heißt insbesondere einstückig, stoffschlüssig, nicht lösbar.

Die Antriebsklinke selber ist aber gegenüber der Anpressplatte biegbar.

Insbesondere weist die Antriebsklinke ein einstellbares Abstandselement auf, das mit einem Anschlag an der Gegendruckplatte zusammenwirkt.

Die Erfindung betrifft weiter ein Kraftfahrzeug aufweisend eine Antriebseinheit und ein Getriebe, die über eine erfindungsgemäße Reibkupplungsvorrichtung mit weggesteuerter Nachstelleinrichtung zur Übertragung von Drehmomenten verbindbar sind.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: ein Kraftfahrzeug mit einer eingerückten Reibkupplungsvorrichtung gemäß DE 10 2104 202 438 in einer Seitenansicht im Schnitt;
- Fig. 2:: die Reibkupplungsvorrichtung gemäß Fig. 1 im ausgerückten Zustand;
- Fig. 3:: eine eingerückte Reibkupplungsvorrichtung mit weggesteuerter Nachstelleinrichtung in einer Seitenansicht im Schnitt;
- Fig. 4:: die Reibkupplungsvorrichtung gemäß Fig. 3 im teilweise ausgerückten Zustand;
- Fig. 5:: die Reibkupplungsvorrichtung gemäß Fig. 3 und 4 im komplett ausgerückten Zustand;
- Fig. 6:: die Reibkupplungsvorrichtung gemäß Fig. 3 bis 5 im erneut eingerückten Zustand (ohne Verschleiß);
- Fig. 7:: die Reibkupplungsvorrichtung gemäß Fig. 3 bis 5 im erneut eingerückten Zustand (mit Verschleiß);
- Fig. 8:: die Reibkupplungsvorrichtung gemäß Fig. 7 im teilweise ausgerückten Zustand; und
- Fig. 9:: die Reibkupplungsvorrichtung gemäß Fig. 7 und 8 im erneut eingerückten Zustand.

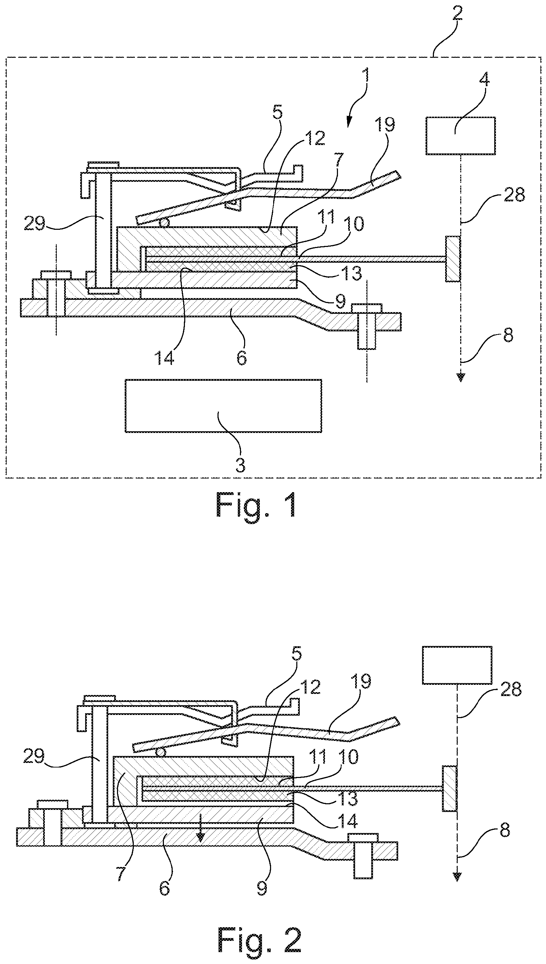

Fig. 1 zeigt ein Kraftfahrzeug 2 mit einer eingerückten Reibkupplungsvorrichtung 1 gemäß DE 10 2104 202 438 in einer Seitenansicht im Schnitt. Die Reibkupplungsvorrichtung 1 ist in einem Antriebsstrang eines Kraftfahrzeuges 2 angeordnet, der eine Antriebseinheit 3 und ein Getriebe 4 aufweist, die über die Reibkupplungsvorrichtung 1 zur Übertragung von Drehmomenten verbindbar sind. Die Reibkupplungsvorrichtung 1 weist eine Drehachse 28 auf. Die Reibkupplungsvorrichtung 1 weist ein getriebeseitiges Deckelbauteil 5, zumindest eine mit einer Abtriebsseite 6 der Antriebseinheit 3 verbindbare Gegendruckplatte 7 und zumindest eine bezüglich der Gegendruckplatte 7 in axialer Richtung 8 der Reibkupplungsvorrichtung 1 begrenzt verlagerbare Anpressplatte 9 auf zur reibschlüssigen Klemmung einer Kupplungsscheibe 10 zwischen der Gegendruckplatte 7 und der Anpressplatte9. Zur reibschlüssigen Klemmung ist ein getriebeseitiger Reibbelag 11 der Kupplungsscheibe 10 mit einer ersten Reibfläche 12 der Gegendruckplatte 7 in Anlage bringbar, und ein motorseitiger Reibbelag 13 der Kupplungsscheibe 10 mit einer zweiten Reibfläche 14 der Anpressplatte 9 in Anlage bringbar.

Die erste Reibfläche 12 der Gegendruckplatte 7 ist in der axialen Richtung 8 zwischen der zweiten Reibfläche 14 der Anpressplatte 9 und dem Deckelbauteil 5 angeordnet. Das Deckelbauteil 5 ist mit der Anpressplatte 9 hier über Laschenabschnitte 29 fest verbunden und gemeinsam mit der Anpressplatte 9 in der axialen Richtung 8 verlagerbar. Eine Tellerfeder 19 ist verkippbar an dem Deckelbauteil 5 gelagert und stützt sich an der Gegendruckplatte 7 ab, so dass das Deckelbauteil 5 und die Anpressplatte 9 bei Betätigung der Reibkupplungsvorrichtung 1 (über die Tellerfeder 19) gegenüber der Gegendruckplatte 7 in der axialen Richtung 8 verlagerbar sind zur reibschlüssigen Klemmung der Kupplungsscheibe 10 zwischen der Gegendruckplatte 7 und der Anpressplatte 9.

Fig. 2 zeigt die Reibkupplungsvorrichtung 1 gemäß Fig. 1 im ausgerückten Zustand. Hier sind das Deckelbauteil 5 und die Anpressplatte 9 durch Betätigung der Reibkupplungsvorrichtung 1 gegenüber der Gegendruckplatte 7 in der axialen Richtung 8 verlagert. Die reibschlüssige Klemmung der Kupplungsscheibe 10 zwischen der Gegendruckplatte 7 und der Anpressplatte 9 wird damit aufgehoben.

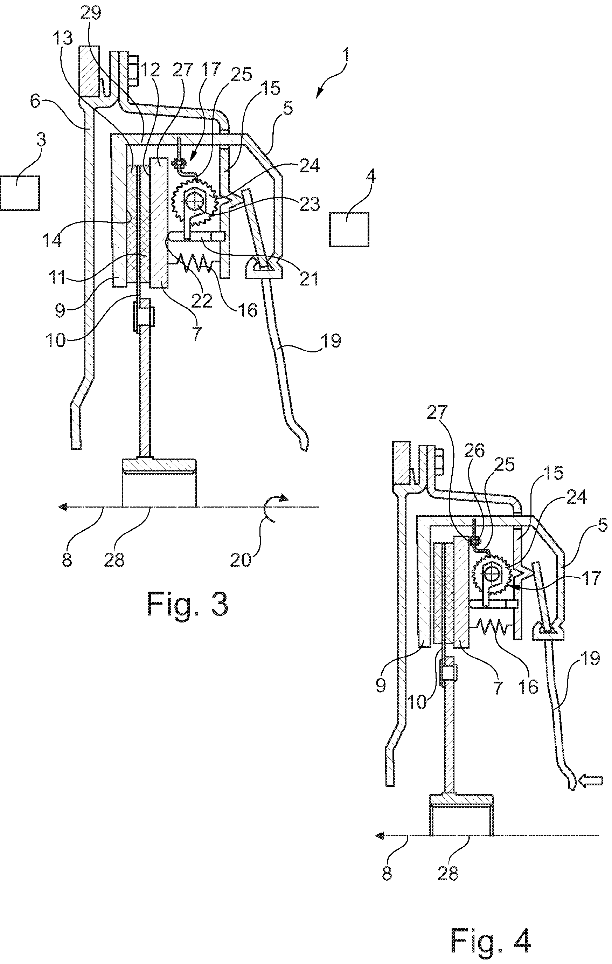

Fig. 3 zeigt eine eingerückte Reibkupplungsvorrichtung 1 mit weggesteuerter Nachstelleinrichtung 17 in einer Seitenansicht im Schnitt. Die Reibkupplungsvorrichtung 1 ist in einem Antriebsstrang eines Kraftfahrzeuges 2 (nicht gezeigt) angeordnet, der eine Antriebseinheit 3 und ein Getriebe 4 aufweist, die über die Reibkupplungsvorrichtung 1 zur Übertragung von Drehmomenten verbindbar sind. Die Reibkupplungsvorrichtung 1 weist eine Drehachse 28 auf, die in Umfangsrichtung 20 rotiert. Die Reibkupplungsvorrichtung 1 weist ein getriebeseitiges Deckelbauteil 5, zumindest eine mit einer Abtriebsseite 6 der Antriebseinheit 3 verbindbare Gegendruckplatte 7 und zumindest eine bezüglich der Gegendruckplatte 7 in axialer Richtung 8 der Reibkupplungsvorrichtung 1 begrenzt verlagerbare Anpressplatte 9 auf zur reibschlüssigen Klemmung einer Kupplungsscheibe 10 zwischen der Gegendruckplatte 7 und der Anpressplatte9. Zur reibschlüssigen Klemmung ist ein getriebeseitiger Reibbelag 11 der Kupplungsscheibe 10 mit einer ersten Reibfläche 12 der Gegendruckplatte 7 in Anlage bringbar, und ein motorseitiger Reibbelag 13 der Kupplungsscheibe 10 mit einer zweiten Reibfläche 14 der Anpressplatte 9 in Anlage bringbar. Die Abtriebsseite 6 umfasst eine in der axialen Richtung 8 nicht verlagerbare Schwungscheibe 15. Die Schwungscheibe 15 und die Gegendruckplatte 7 sind über eine Mehrzahl von Blattfedern 16 drehfest miteinander verbunden.

Die erste Reibfläche 12 der Gegendruckplatte 7 ist in der axialen Richtung 8 zwischen der zweiten Reibfläche 14 der Anpressplatte 9 und dem Deckelbauteil 5 angeordnet. Das Deckelbauteil 5 ist mit der Anpressplatte 9 auch hier über Laschenabschnitte 29 fest verbunden und gemeinsam mit der Anpressplatte 9 in der axialen Richtung 8 verlagerbar. Eine Tellerfeder 19 ist verkippbar an dem Deckelbauteil 5 gelagert und stützt sich an der Schwungscheibe 15 ab, so dass das Deckelbauteil 5 und die Anpressplatte 9 bei Betätigung der Reibkupplungsvorrichtung 1 gegenüber der Schwungscheibe 15 in der axialen Richtung 8 verlagerbar sind zur reibschlüssigen Klemmung der Kupplungsscheibe 10 zwischen der Gegendruckplatte 7 und der Anpressplatte 9. Die Schwungscheibe 15 ist in der axialen Richtung 8 zumindest teilweise zwischen der Gegendruckplatte 7 und dem Deckelbauteil 5 angeordnet.

Die Gegendruckplatte 7 ist über eine Verschleißnachstellvorrichtung 17 in der axialen Richtung 8 gegenüber der Schwungscheibe 15 zum Ausgleichen eines Verschleißes 18 (hier nicht gezeigt) der Reibbeläge 11, 13 bewegbar.

Die Verschleißnachstellvorrichtung 17 umfasst hier einen in einer Umfangsrichtung 20 verdrehbaren Rampenring 21, der mit zumindest einer an der Gegendruckplatte 7 angeordneten Gegenrampe 22 zum Bewegen der Gegendruckplatte 7 in der axialen Richtung 8 zusammenwirkt.

Die Verschleißnachstellvorrichtung 17 umfasst weiter eine Spindel 23 und ein damit verbundenes Ritzel 24, wobei Rampenring 21, Gegenrampe 22, Spindel 23 und Ritzel 24 in der axialen Richtung 8 zwischen Schwungscheibe 15 und Gegendruckplatte 7 angeordnet sind. Weiter weist die Verschleißnachstellvorrichtung 17 eine Antriebsklinke 25 zum Antrieb des Ritzels 24 aufweist, wobei die Antriebsklinke 25 mit dem Deckelbauteil 5 oder der Anpressplatte 9 (das schließt die Laschenabschnitte 29 mit ein) fest verbunden und gemeinsam zumindest mit der Anpressplatte 9 in der axialen Richtung 8 verlagerbar ist.

Fig. 4 zeigt die Reibkupplungsvorrichtung 1 gemäß Fig. 3 im teilweise ausgerückten Zustand, wobei das Deckelbauteil 5 und die Anpressplatte 9 bei durch Betätigung Tellerfeder 19 gegenüber der Schwungscheibe 15 in der axialen Richtung 8 verlagert wurden. In Folge dieser Verlagerung bewegt sich auch die mit dem Deckelbauteil 5 bzw. der Anpressplatte 9 fest verbundene Antriebsklinke 25 gegenüber dem Ritzel 24, dass zusammen mit Spindel 23 und Rampenring 21 an der Schwungscheibe 15 befestigt ist.

Im eingerückten Zustand der Reibkupplungsvorrichtung 1 liegt die Antriebsklinke 25 im Zahngrund des Ritzels 24 (siehe Fig. 3; markierter Zahn unmittelbar rechts von Antriebsklinke 25). Durch die Bewegung der Antriebsklinke 25 gegenüber dem Ritzel 24 bewegt sich die Antriebsklinke entlang der Zahnflanke bis zur Zahnspitze, wobei der Relativweg zwischen Antriebsklinke 25 und Ritzel 24 durch ein einstellbares Abstandselement 26 begrenzt wird, das mit einem Anschlag 27 an der Gegendruckplatte 7 zusammenwirkt. Das einstellbare Abstandselement 26 wird auch zur Kompensation von Bauteiltoleranzen, wie z. B. der Dicke der Kupplungscheibe 10, genutzt. Das Abstandselement 26 verhindert, dass bei jeder Betätigung der Reibkupplungsvorrichtung 1, also auch ohne Verschleiß 18, eine dann ungewollte Nachstellung erfolgt.

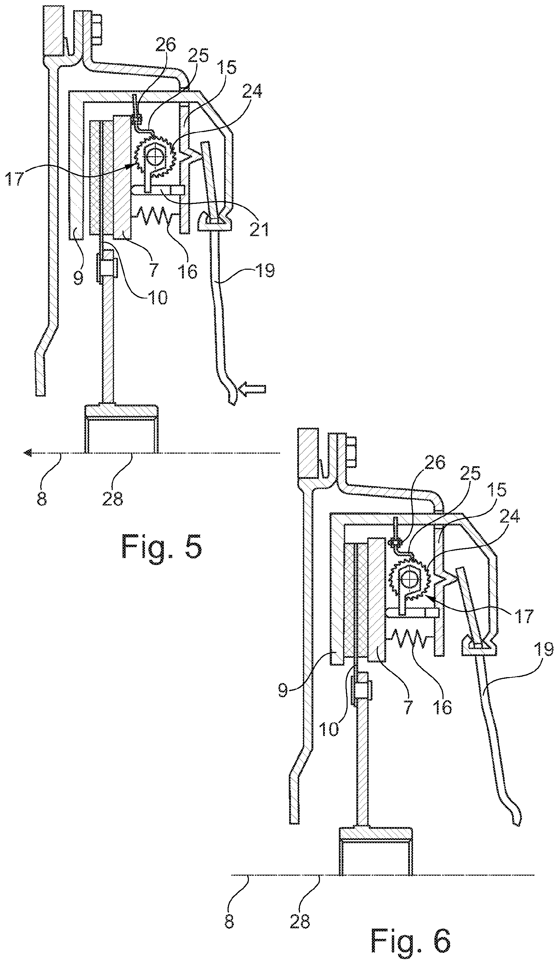

Fig. 5 zeigt die Reibkupplungsvorrichtung 1 gemäß Fig. 3 und 4 im komplett ausgerückten Zustand. Die Antriebsklinke 25 liegt weiterhin an der Zahnspitze des Ritzels 24 an (siehe Fig. 4).

Fig. 6 zeigt die Reibkupplungsvorrichtung 1 gemäß Fig. 3 bis 5 im erneut eingerückten Zustand (ohne Verschleiß 18). Erkennbar liegt die Antriebsklinke 25 im gleichen Zahngrund des Ritzels 24 wie in Fig. 3 (siehe markierter Zahn unmittelbar rechts der Antriebsklinke 25). Eine Nachstellung ist also nicht erfolgt.

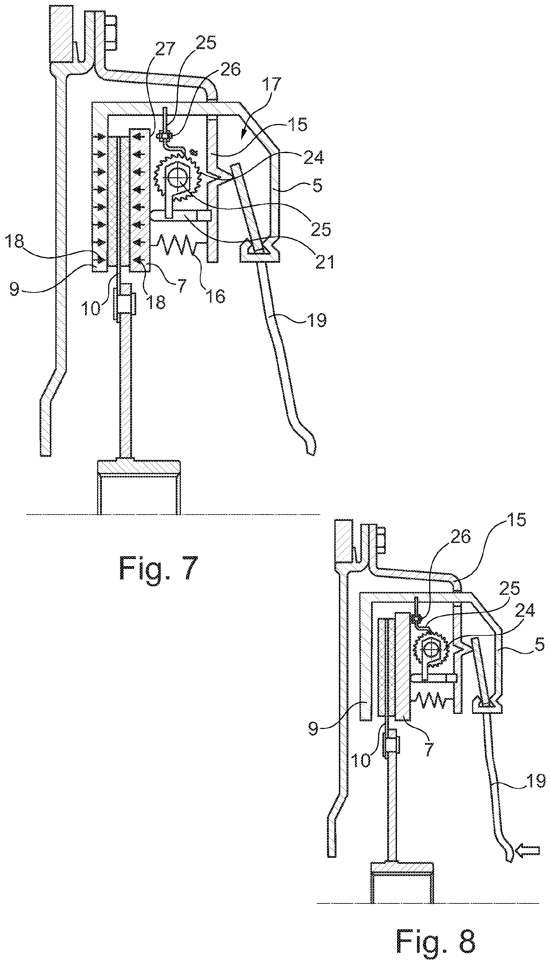

Fig. 7 zeigt die Reibkupplungsvorrichtung 1 gemäß Fig. 3 bis 5 im erneut eingerückten Zustand (mit Verschleiß 18). Dieser Verschleiß 18, also eine Verringerung der Belagdicke der Reibbeläge 11, 13 führt dazu, dass der Kupplungsdeckel 5 und die Anpressplatte 9 entlang der axialen Richtung 8 in Richtung Getriebe 4 verlagert werden (siehe Fig. 3). Damit wird auch die Antriebsklinke 25 gegenüber dem Ritzel 24 verlagert, so dass im dargestellten eingerückten Zustand der Reibkupplungsvorrichtung (Antriebsklinke 25 liegt im Zahngrund an) das Ritzel 24 verdreht wird. Die Verdrehung des Ritzels 24 bewirkt eine Verdrehung der Spindel 23 und eine Verlagerung der darauf gelagerten Spindelmutter, die mit dem Rampenring 21 zusammenwirkt (siehe auch DE 10 2009 035 225 A1).

Fig. 8 zeigt die Reibkupplungsvorrichtung 1 gemäß Fig. 7 im teilweise ausgerückten Zustand. Hier kann nun die Antriebsklinke 25 aufgrund des größeren möglichen Relativwegs zwischen Antriebsklinke 25 und Ritzel 24 in den nächsten Zahn des Ritzels 24 springen (siehe markierter Zahn nun beabstandet von Antriebsklinke 25).

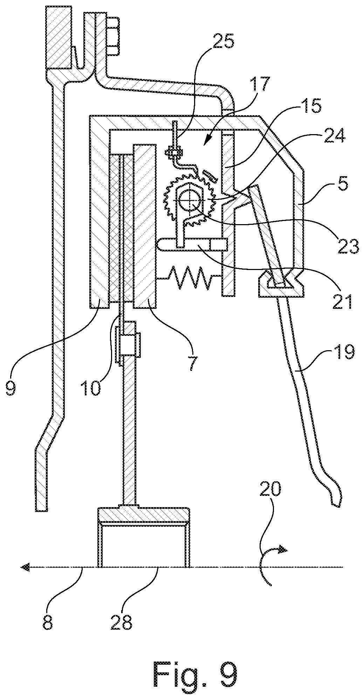

Fig. 9 zeigt die Reibkupplungsvorrichtung 1 gemäß Fig. 7 und 8 im erneut eingerückten Zustand. Wie bereits zu Fig. 7 ausgeführt, bewirkt der aufgetretene Verschleiß 18 der Beläge 11, 13 eine Verdrehung des Ritzels 24 (siehe Pfeil).

Die Verdrehung des Ritzels 24 bewirkt entsprechend eine Verlagerung des Rampenringes 21, so dass die Lage der Gegendruckplatte 7 durch den Rampenring 21 verändert wird. Die Gegendruckplatte 7 wird entsprechend hin zur Kupplungsscheibe 10 bzw. hin zur Anpressplatte 9 entlang der axialen Richtung verlagert.

### Bezugszeichenliste

- 1: Reibkupplungsvorrichtung
- 2: Kraftfahrzeug
- 3: Antriebseinheit
- 4: Getriebe
- 5: Deckelbauteil
- 6: Abtriebsseite
- 7: Gegendruckplatte
- 8: axiale Richtung
- 9: Anpressplatte
- 10: Kupplungsscheibe
- 11: getriebeseitiger Reibbelag
- 12: erste Reibfläche (der Gegendruckplatte)
- 13: motorseitiger Reibbelag
- 14: zweite Reibfläche (der Anpressplatte)
- 15: Schwungscheibe
- 16: Blattfeder
- 17: Verschleißnachstellvorrichtung
- 18: Verschleiß
- 19: Tellerfeder
- 20: Umfangsrichtung
- 21: Rampenring
- 22: Gegenrampe
- 23: Spindel
- 24: Ritzel
- 25: Antriebsklinke
- 26: Abstandselement
- 27: Anschlag
- 28: Drehachse
- 29: Laschenabschnitt

## Patentansprüche

1. Normal-eingerückte Reibkupplungsvorrichtung (1), insbesondere eine normal-eingerückte Einzelkupplung, für einen Antriebsstrang eines Kraftfahrzeuges (2) aufweisend eine Antriebseinheit (3) und ein Getriebe (4), die über die Reibkupplungsvorrichtung (1) zur Übertragung von Drehmomenten verbindbar sind, wobei die Reibkupplungsvorrichtung (1) zumindest ein getriebeseitiges Deckelbauteil (5), zumindest eine mit einer Abtriebsseite (6) der Antriebseinheit (3) verbindbare Gegendruckplatte (7) und zumindest eine bezüglich der Gegendruckplatte (7) in einer axialen Richtung (8) der Reibkupplungsvorrichtung (1) begrenzt verlagerbare Anpressplatte (9) aufweist zur reibschlüssigen Klemmung einer Kupplungsscheibe (10) zwischen der Gegendruckplatte (7) und der Anpressplatte (9), **dadurch gekennzeichnet, dass** zur reibschlüssigen Klemmung ein getriebeseitiger Reibbelag (11) der Kupplungsscheibe (10) mit einer ersten Reibfläche (12) der Gegendruckplatte (7) in Anlage bringbar ist, und ein motorseitiger Reibbelag (13) der Kupplungsscheibe (10) mit einer zweiten Reibfläche (14) der Anpressplatte (9) in Anlage bringbar ist,
wobei die Abtriebsseite (6) eine in der axialen Richtung (8) nicht verlagerbare Schwungscheibe (15) umfasst, wobei die Schwungscheibe (15) und die Gegendruckplatte (7) über eine Mehrzahl von Blattfedern (16) drehfest miteinander verbunden sind, wobei die Gegendruckplatte (7) über eine Verschleißnachstellvorrichtung (17) in der axialen Richtung (8) gegenüber der Schwungscheibe (15) zum Ausgleichen eines Verschleißes (18) der Reibbeläge (11, 13) und Reibflächen (12, 14) bewegbar ist.

2. Reibkupplungsvorrichtung (1) nach Anspruch 1, wobei die erste Reibfläche (12) der Gegendruckplatte (7) in der axialen Richtung (8) zwischen der zweiten Reibfläche (14) der Anpressplatte (9) und dem Deckelbauteil (5) angeordnet ist.

3. Reibkupplungsvorrichtung (1) nach einem der vorhergehenden Ansprüche, wobei das Deckelbauteil (5) mit der Anpressplatte (9) fest verbunden und gemeinsam mit der Anpressplatte (9) in der axialen Richtung (8) verlagerbar ist.

4. Reibkupplungsvorrichtung (1) nach Anspruch 3, wobei eine Tellerfeder (19) verkippbar an dem Deckelbauteil (5) gelagert ist und sich an der Schwungscheibe (15) abstützt, so dass das Deckelbauteil (5) und die Anpressplatte (9) bei Betätigung der Reibkupplungsvorrichtung (1) gegenüber der Schwungscheibe (15) in der axialen Richtung (8) verlagerbar sind zur reibschlüssigen Klemmung der Kupplungsscheibe (10) zwischen der Gegendruckplatte (7) und der Anpressplatte (9).

5. Reibkupplungsvorrichtung (1) nach einem der vorhergehenden Ansprüche, wobei die Schwungscheibe (15) in der axialen Richtung (8) zumindest teilweise zwischen der Gegendruckplatte (7) und dem Deckelbauteil (5) angeordnet ist.

6. Reibkupplungsvorrichtung (1) nach einem der vorhergehenden Ansprüche, wobei die Verschleißnachstellvorrichtung (17) einen in einer Umfangsrichtung (20) verdrehbaren Rampenring (21) aufweist, der mit zumindest einer an der Gegendruckplatte (7) angeordneten Gegenrampe (22) zum Bewegen der Gegendruckplatte (7) in der axialen Richtung (8) zusammenwirkt.

7. Reibkupplungsvorrichtung (1) nach Anspruch 6, wobei die Verschleißnachstellvorrichtung (17) weiter eine Spindel (23) und ein damit verbundenes Ritzel (24) aufweist, wobei Rampenring (21), Gegenrampe (22), Spindel (23) und Ritzel (24) in der axialen Richtung (8) zwischen Schwungscheibe (15) und Gegendruckplatte (7) angeordnet sind.

8. Reibkupplungsvorrichtung (1) nach Anspruch 7, wobei die Verschleißnachstellvorrichtung (17) weiter eine Antriebsklinke (25) zum Antrieb des Ritzels (24) aufweist, wobei die Antriebsklinke (25) mit dem Deckelbauteil (5) oder der Anpressplatte (9) fest verbunden ist und gemeinsam zumindest mit der Anpressplatte (9) in der axialen Richtung (8) verlagerbar ist.

9. Reibkupplungsvorrichtung (1) nach Anspruch 8, wobei die Antriebsklinke (25) ein einstellbares Abstandselement (26) aufweist, das mit einem Anschlag (27) an der Gegendruckplatte (7) zusammenwirkt.

10. Kraftfahrzeug (2) aufweisend eine Antriebseinheit (3) und ein Getriebe (4), die über eine Reibkupplungsvorrichtung (1) nach einem der vorhergehenden Ansprüche zur Übertragung von Drehmomenten verbindbar sind.

## Claims

1. A normally engaged friction clutch (1), in particular a normally engaged single clutch, for a drive train of a motor vehicle (2) comprising a drive unit (3) and a transmission (4) which can be connected via the friction clutch (1) for the transmission of torques, wherein the friction clutch (1) has at least one transmission-side cover component (5), at least one counter pressure plate (7) which can be connected to an output side (6) of the drive unit (3) and at least one displaceable pressure plate (9) delimited with respect to the counter pressure plate (7) in an axial direction (8) of the friction clutch (1) for frictionally clamping a clutch disc (10) between the counter pressure plate (7) and the pressure plate (9), **characterised in that** a transmission-side friction lining (11) of the clutch disc (10) can be engaged with a first friction surface (12) of the counter pressure plate (7), and a motor-side friction lining (13) of the clutch disc (10) can be engaged with a second friction surface (14) of the pressure plate (9), the output side (6) comprising a flywheel (15) which cannot be displaced in the axial direction (8), wherein the flywheel (15) and the counter pressure plate (7) are connected to one another in a rotationally fixed manner via a plurality of leaf springs (16), the counter pressure plate (7) being moveable via a wear compensation device (17) in the axial direction (8) relative to the flywheel (15) to compensate for wear (18) of the friction linings (11, 13) and friction surfaces (12, 14).

2. The friction clutch (1) according to claim 1, wherein the first friction surface (12) of the counter pressure plate (7) is arranged in the axial direction (8) between the second friction surface (14) of the pressure plate (9) and the cover component (5).

3. The friction clutch (1) according to one of the preceding claims, wherein the cover component (5) is firmly connected to the pressure plate (9) and can be displaced together with the pressure plate (9) in the axial direction (8).

4. The friction clutch (1) according to claim 3, wherein a plate spring (19) is tiltably mounted on the cover component (5) and is supported on the flywheel (15), so that the cover component (5) and the pressure plate (9) are displaceable in relation to the flywheel (15) in the axial direction (8) when the friction clutch is actuated (1) for frictionally clamping the clutch disc (10) between the counter pressure plate (7) and the pressure plate (9).

5. The friction clutch (1) according to any one of the preceding claims, wherein the flywheel (15) is arranged in the axial direction (8) at least partially between the counter pressure plate (7) and the cover component (5).

6. The friction clutch (1) according to any one of the preceding claims, wherein the wear compensation device (17) has a ramp ring (21) which can be rotated in a circumferential direction (20), which interacts with at least one counter ramp (22) arranged on the counter pressure plate (7) for moving the counter pressure plate (7) in the axial direction (8).

7. The friction clutch (1) according to claim 6, wherein the wear compensation device (17) further comprises a spindle (23) and a pinion (24) connected thereto, wherein the ramp ring (21), counter ramp (22), spindle (23) and pinion (24) are arranged in the axial direction (8) between the flywheel (15) and the counter pressure plate (7).

8. The friction clutch (1) according to claim 7, wherein the wear compensation device (17) further comprises a drive pawl (25) for driving the pinion (24), the drive pawl (25) being firmly connected to the cover component (5) or the pressure plate (9) and displaceable together at least with the pressure plate (9) in the axial direction (8).

9. The friction clutch (1) according to claim 8, wherein the drive pawl (25) has an adjustable spacer element (26) which interacts with a stop (27) on the counter pressure plate (7).

10. A motor vehicle (2) having a drive unit (3) and a transmission (4) which can be connected via a friction clutch (1) according to any one of the preceding claims for the transmission of torques.

## Revendications

1. Embrayage à friction (1) normalement engagé, en particulier un embrayage simple normalement engagé, pour une chaîne cinématique d'un véhicule automobile (2) comprenant une unité d'entraînement (3) et une transmission (4) qui peuvent être reliées via l'embrayage à friction (1) pour la transmission de couples, l'embrayage à friction (1) comportant au moins un composant capot côté transmission (5), au moins une plaque de contre-pression (7) qui peut être reliée à un côté sortie (6) de l'unité d'entraînement (3) et au moins une plaque de pression (9) déplaçable de façon limitée par rapport à la plaque de contre-pression (7) dans une direction axiale (8) de l'embrayage à friction (1) pour le serrage par friction d'un disque d'embrayage (10) entre la plaque de contre-pression (7) et la plaque de pression (9), **caractérisé en ce que**, pour le serrage par friction, une garniture de friction (11) côté transmission du disque d'embrayage (10) est amenée en appui avec une première surface de friction (12) de la plaque de contre-pression (7) et une garniture de friction (13) côté moteur du disque d'embrayage (10) peut être amenée en appui avec une seconde surface de friction (14) de la plaque de pression (9), le côté sortie (6) comprenant un volant d'inertie (15) qui ne peut pas être déplacé dans la direction axiale (8), moyennant quoi le volant d'inertie (15) et la plaque de contre-pression (7) étant reliés entre eux solidairement en rotation par une pluralité de ressorts à lames (16), la plaque de contre-pression (7) pouvant être déplacée dans la direction axiale (8) par rapport au volant d'inertie (15) par le biais d'un dispositif de rattrapage d'usure (17) pour compenser une usure (18) des garnitures de friction (11, 13) et des surfaces de friction (12, 14).

2. Embrayage à friction (1) selon la revendication 1, la première surface de friction (12) de la plaque de contre-pression (7) étant disposée dans la direction axiale (8) entre la seconde surface de friction (14) de la plaque de pression (9) et le composant capot (5).

3. Embrayage à friction (1) selon l'une quelconque des revendications précédentes, le composant capot (5) étant solidement relié à la plaque de pression (9) et pouvant être déplacé avec la plaque de pression (9) dans la direction axiale (8).

4. Embrayage à friction (1) selon la revendication 3, un ressort à lames (19) étant monté inclinable sur le composant capot (5) et supporté sur le volant d'inertie (15), de telle sorte que le composant capot (5) et la plaque de pression (9) puissent être déplacés dans la direction axiale (8) lorsque l'embrayage à friction (1) est actionné par rapport au volant d'inertie (15) pour serrer par friction le disque d'embrayage (10) entre la plaque de contre-pression (7) et la plaque de pression (9).

5. Embrayage à friction (1) selon l'une quelconque des revendications précédentes, le volant d'inertie (15) étant disposé dans la direction axiale (8) au moins partiellement entre la plaque de contre-pression (7) et le composant capot (5).

6. Embrayage à friction (1) selon l'une quelconque des revendications précédentes, le dispositif de rattrapage d'usure (17) ayant une bague de rampe (21) qui peut être tournée dans une direction circonférentielle (20) qui coopère avec au moins une contre-rampe (22) disposée sur la plaque de contre-pression (7) pour déplacer la plaque de contre-pression (7) dans la direction axiale (8).

7. Embrayage à friction (1) selon la revendication 6, le dispositif de rattrapage d'usure (17) comprenant en outre une broche (23) et un pignon (24) relié à celle-ci, la bague de rampe (21), la contre-rampe (22), la broche (23) et le pignon (24) étant disposés dans la direction axiale (8) entre le volant d'inertie (15) et la plaque de contre-pression (7).

8. Embrayage à friction (1) selon la revendication 7, le dispositif de rattrapage d'usure (17) comprenant en outre un cliquet d'entraînement (25) pour entraîner le pignon (24), le cliquet d'entraînement (25) étant solidement relié au composant capot (5) ou à la plaque de pression (9) et pouvant être déplacé au moins conjointement avec la plaque de pression (9) dans la direction axiale (8).

9. Embrayage à friction (1) selon la revendication 8, le cliquet d'entraînement (25) ayant un élément d'espacement réglable (26) qui coopère avec une butée (27) sur la plaque de contre-pression (7).

10. Véhicule automobile (2) ayant une unité d'entraînement (3) et une transmission (4) qui peut être reliée par le biais d'un embrayage à friction (1) selon l'une quelconque des revendications précédentes pour la transmission de couples.
